# EUROPEAN PATENT SPECIFICATION

(11) **EP 1 772 260 B1**
(45) Date of publication and mention of the grant of the patent: **02.07.2014**
(21) Application number: 05766429.4
(22) Date of filing: 21.07.2005
(51) Int. Cl.: B32B 27/32, B65D 65/40

(54) **PROPYLENE-BASED MULTILAYERED WRAPPING FILM**
MEHRSCHICHTIGE VERPACKUNGSFOLIE AUF PROPYLENBASIS
FILM D'EMBALLAGE MULTICOUCHE A BASE DE PROPYLENE

(30) Priority: 23.07.2004 JP 2004215956
(43) Date of publication of application: 11.04.2007
(73) Proprietor: Asahi Kasei Chemicals Corporation, Tokyo 101-8101 (JP)
(72) Inventor: HASHIMOTO, Satoshi, Tokyo 100-8440 (JP); MUKOHARA, Takafumi, Tokyo 100-8440 (JP)
(74) Representative: Von Kreisler Selting Werner - Partnerschaft von Patentanwälten und Rechtsanwälten mbB
(86) International application number: PCT/JP2005/013370
(87) International publication number: WO 2006/009198

(56) References cited:
- WO-A-03/043818
- WO-A1-2004/020195
- JP-A- 6 166 294
- JP-A- 9 123 061
- JP-A- 63 251 287
- JP-A- 2003 019 778
- JP-A- 2004 107 417

## Description

### TECHNICAL FIELD

The present invention relates to a film to be used for packaging articles such as packaging food. In particular, the invention relates to an excellent polypropylene based wrap film having clinging properties necessary for packaging food and being free from sticky feeling and also free from twining on a hand at the time of handling.

### BACKGROUND ART

Thin thermoplastic resin films have been used at restaurants, food shops or home when food is stored or heated and cooked in a microwave oven. Among them, a wrap film made of a vinylidene chloride based copolymer resin is used frequently as a food packaging wrap film because it has excellent properties including moisture resistance, oxygen gas barrier properties, heat resistance, clinging properties to a container, and transparency.

In recent years, various food packaging wrap films composed mainly of a polyolefin based resin have been proposed. Examples of such films include polyethylene based resins, polypropylene based resins, and poly-4-methylpentene-1 resins. However, these films do not substantially have clinging properties to the film surface so that, for example, a clinging performance to a container, which is essential as a food packaging wrap film, is insufficient. In order to meet these desired performances, a number of films mixed with various additives or other resin, or laminated with other resin have been proposed. However, they were poor in practical usability because not only the clinging properties to a container but also film-to-film clinging properties are heightened, leading to poor pulling-out properties from a dispenser box.

In order to solve the foregoing various problems, various proposals have been made as to the clinging properties of a wrap film. JP-A-10-202806 proposes a self-sticky wrap film composed of a core layer made of a polypropylene based resin and a surface layer containing, as a clinging agent, a combination of an aliphatic hydrocarbon and a fatty acid ester of an aliphatic polyhydric alcohol which is a so-called oil and fat. However, this technology involved such a problem that when a food material having a high water content is packaged with the wrap film and heated in a microwave oven, it raises a problem of bubbling of the oil and fat on the wrap film surface by the action of water. Moreover, when this oil and fat is present on the film surface, a sticky feeling is caused in handling by a hand.

JP-A-2000-281861 proposes a technology for obtaining self-sticky properties by adding a specific amount of a fatty acid ester of an aliphatic polyhydric alcohol to a propylene based block copolymer. In this patent document, it is proposed to add a hydrogenated petroleum based hydrocarbon resin. However, in products using this, it is considered that a sticky feeling is heightened at the same time with heightening of stickiness.

JP-A-2001-328223 proposes a technology for adding polybutene or polyisobutylene to a polypropylene based resin. However, since such an additive has viscous characteristics, stickiness to a hand is caused in handling the wrap film.

In view of high rigidity, a wrap film using a poly(4-methylpentene-1) based resin is proposed in JP-A-2001-121660, etc. However, since a wrap film made of a material having high rigidity is poor in an ability to follow the contour of an article, it is required to impart high stickiness on the film surface. Due to this high stickiness, a sticky feeling is brought, or twining on a hand appears in handling the wrap film.

A wrap film having high clinging properties is proposed in JP-A-2003-19778 and WO 2004/020195. Though these patent documents propose a technology for continuously obtaining high clinging properties and easy pulling-out properties, twining on a hand and hand touch feeling are not improved. In particular, when a film is pulled out from a box and cut by a blade attached to the box, there is some possibility that the film twines on a hand which holds the film. As a measure for improving this problem, it may be considered to make the film thick or to make the film highly elastic. However, according to such a measure, the ability to follow the contour of an article having a complicated shape is poor so that clinging properties to the article, which are an original object of a wrap film, is remarkably deteriorated.

WO-A-03/043818 discloses a wrap film which is devoid of a chlorine-based resin. JP-A-6-166294, JP-A-9-123061 and JP-A-63-251287 disclose to use a rosin derivative as an adhesion-imparting agent.

JP-A-2004-107417 discloses a biaxially oriented moistureproof polypropylene film having excellent moistureproofness, lamination strength, and thickness accuracy obtained from a polypropylene composition comprising 97-75 wt.% propylene polymer composition composed of a propylene homopolymer (A) and a propylene-[alpha]-olefin copolymer (B) with an [alpha]-olefin content of 0.1-1.8 mol% and 3-25 wt.% tackifier.

In order to strengthen clinging properties of a wrap film to an article, there may be the case where the film is lightly pressed by the palm. When the film comes into contact with the palm, a sticky feeling is possibly brought. Hitherto, for the purpose of inhibiting this sticky feeling, the clinging properties have been lowered.

### DISCLOSURE OF THE INVENTION

An object of the invention is to provide a wrap film which is excellent in heat resistance and cold resistance; which when handled by a hand, is free from twining on the hand and does not impart unpleasant feelings such as a sticky feeling; and which has necessary clinging properties.

In order to solve the foregoing problems, the present inventors made extensive and intensive investigations. As a result, they have accomplished the invention.

That is, the invention mainly relates to the following wrap films:

A polypropylene based wrap film as a multilayered film, which comprises:
(A) a surface layer containing: a first composition comprising from 50 to 99 % by weight of (S1) a crystalline polypropylene based resin and from 1 to 50 % by weight of (S2) at least one softener selected from amorphous or lowly crystalline propylene-α-olefin copolymers and butene-1 polymers; and from 2 to 20 parts by weight of (S3) an ester compound of rosin as hydrogenated under a high pressure of 20 MPa or more and not more than 40 MPa and a polyhydric aliphatic alcohol and from 2 to 20 parts by weight of (S4) a mineral oil having a rate of naphthene of not more than 33 % by weight, each based on 100 parts by weight of the total sum (S1 + S2) of the first composition; and
(B) a core layer which is disposed adjacent to the surface layer and which contains from 80 to 99 % by weight of (C1) a crystalline polypropylene based resin and from 1 to 20 % by weight of (C2) a mineral oil,
wherein the volumetric ratio f of the surface layer (A) including both surfaces to the core layer (B) is in the range of from 0.2 to 2.7.

Preferred embodiments of the invention are apparent from the dependent claims.

According to the foregoing constituent requirements, the wrap film of the invention is excellent in heat resistance and cold resistance; when handled by a hand, is free from twining on the hand and does not impart unpleasant feelings such as a sticky feeling; and has excellent clinging properties.

### BEST MODE FOR CARRYING OUT THE INVENTION

The invention will be specifically described below.

Since the wrap film of the invention has both cold resistance and heat resistance, it can be used over a wide temperature range including the storage in a freezer and heating in a microwave oven. Among starting resins which can be used for packaging food, a polypropylene based resin is excellent in the balance between cold resistance and heat resistance and has excellent transparency as compared with polyethylene based resins, polystyrene based resins, vinyl chloride based resins, and the like. However, since the polypropylene resin per se does not have clinging properties, it must be modified by an additive or the like.

The polypropylene based resin which is used in the invention has a propylene unit in the polymer molecular chain thereof and includes a homopolymer composed only of a propylene unit and binary or ternary copolymers of propylene with ethylene, butene-1, etc. For the purpose of obtaining a film having excellent transparency, random copolymers are preferable. With respect to the stereoregularity, either one of an isotactic structure or a syndiotactic structure, or a mixture thereof may be employed. Although there are no further limitations, for example, taking into consideration the use for a food packaging film, ones which come up to the food package standards are preferable from the viewpoint of safety.

It is preferable that the polypropylene based resin has a melt flow rate, as measured at 230 °C under a load of 2.16 kg according to the method as defined in ASTM D1238, of from 1 to 20 g/10 min.

The component which is used as a softener to be contained in the surface layer (A) is selected from amorphous or lowly crystalline propylene-α-olefin copolymers and butene-1 polymers. Ones which come up to the food package standards are preferable from the viewpoint of safety.

The amorphous or low crystalline propylene-α-olefin copolymer is a copolymer of propylene and an α-olefin having 4 or more carbon atoms such as butene-1 and pentene-1. Its rate of propylene is preferably from 65 to 85 % by weight. A degree of crystallization of the amorphous or lowly crystalline propylene-α-olefin copolymer as measured by a differential scanning calorimeter is preferably in the range of from 0 to 50 %.

The amorphous or lowly crystalline propylene-α-olefin copolymer preferably has a melt flow rate, as measured at 230 °C under a load of 2.16 kg according to the method as defined in ASTM D1238, of from 1 to 10 g/10 min. and a density according to ASTM D1505 of from 0.85 to 0.89 g/cm³.

As the amorphous or lowly crystalline propylene-α-olefin copolymer, one which is rich in flexibility by itself and which when mixed with a crystalline polypropylene based resin, gives flexibility to the film without impairing transparency is preferable. Examples of the amorphous or lowly crystalline polypropylene based resin include TAFMER (registered trade mark) as manufactured by Mitsui Chemicals, Inc.

The butene-1 polymer is a homopolymer as obtained by polymerizing a liquid butene-1 monomer. The butene-1 polymer preferably has a melt flow rate, as measured at 190 °C under a load of 2.16 kg according to the method as defined in ASTM D1238, of from 0.1 to 5 g/10 min. and a density according to ASTM D1505 of from 0.904 to 0.920 g/cm³.

The foregoing softener has good compatibility with the crystalline polypropylene based resin. When an appropriate amount of this softener is blended, it brings an effect for reducing a tensile module or flexural modulus, namely an effect for imparting flexibility, without largely impairing transparency, humidity resistance and heat resistance which the crystalline polypropylene based resin originally has.

In the case where the ester compound of rosin (S3) as a clinging agent is used, from the viewpoints of flexibility and hand touch feeling of the resulting film and its ability to follow the contour of an article to be packaged, an amount of the crystalline polypropylene based resin (S1) which constitutes the first composition is in the range of from 50 to 99 % by weight; and an amount of the at least one softener (S2) selected from amorphous or lowly crystalline propylene-α-olefin copolymers and butene-1 polymers, which also constitutes the first composition, is in the range of from 1 to 50 % by weight.

In the case where the amount of the softener is less than 1 % by weight, flexibility of the film is insufficient so that when packaging is made by using the film, the film does not follow the contour of an article to be packaged, whereby a sufficient contact area between the film and the article to be packaged is not obtained. In the case where the amount of the softener exceeds 50 % by weight, the film becomes excessively soft so that during a period of time from pulling out of the film from a dispenser box until covering on an article to be packaged, film-to-film overlapping likewise wrinkles is generated, and an easy-to-use as the wrap film is poor.

The component (S3) which is used as the clinging agent in the surface layer (A) is selected from the ester compound of rosin as mentioned above.

As the clinging agent, ones which come up to the food package standards are preferable.

The rosin derivative is a rosin obtained by purification of a resinic acid contained in a pine tree or a compound capable of deriving a rosin. This rosin is a mixture of abietic acid and an isomer thereof. The rosin is classified into gum rosin, wood rosin, and tall oil rosin depending upon the raw material and production process, and all of these materials are employable. Examples of the derivative include hydrogenated rosin which is a compound resulting from hydrogenation of rosin, ester compounds of rosin and an aliphatic alcohol, and ester compounds of hydrogenated rosin and an aliphatic alcohol.

Examples of the aliphatic alcohol which is used in the ester compounds include methanol, glycerin, and pentaerythritol. In the invention, as the clinging agent which exhibits more excellent effects, hydrogenated rosin is preferable, and ester compounds of hydrogenated rosin and a polyhydric alcohol are more preferable. Specific examples thereof include FORAL (registered trade mark) 105E as manufactured by Eastman Chemical Company and FORAL (registered trade mark) 105 as manufactured by Hercules Incorporated, all of which are a hydrogenated rosin pentaerythritol ester; and FORAL (registered trade mark) 85E as manufactured by Eastman Chemical Company and FORAL (registered trade mark) 85 as manufactured by Hercules Incorporated, all of which are a hydrogenated rosin glycerin ester.

As the rosin derivative of the invention, ester compounds of high-pressure hydrogenated rosin and a polyhydric aliphatic alcohol are more preferable. Examples of the ester compound of high-pressure hydrogenated rosin and a polyhydric aliphatic alcohol include compounds as obtained by esterifying rosin and a polyhydric aliphatic alcohol and then hydrogenating the ester under a pressure of 20 MPa or more and not more than 40 MPa and compounds obtained by hydrogenating rosin under a pressure of 20 MPa or more and not more than 40 MPa and then esterifying the hydrogenated rosin with a polyhydric aliphatic alcohol. Examples of the polyhydric aliphatic alcohol include glycerin and pentaerythritol.

The foregoing hydrogenation is carried out by mixing the compound with, as a catalyst, a platinum-group metal such as palladium and rhodium and hydrogenating the mixture under a pressure of from 20 MPa to 40 MPa. A reaction temperature is preferably in the range of from 200 °C to 300 °C, and a reaction time is preferably 2 hours or more.

By using an ester compound of high-pressure hydrogenated rosin and a polyhydric aliphatic alcohol, it is possible to largely improve a sticky feeling of the film. When the hydrogenation condition meets the foregoing ranges, a double bond does not retain within the rosin so that oxidation caused by a double bond does not substantially occur.

The amount of addition of the clinging agent (S3) is in the range of from 2 to 20 parts by weight, preferably from 3 to 15 parts by weight, and more preferably from 4 to 10 parts by weight based on 100 parts by weight of the total sum of the crystalline polypropylene based resin (S1) and the softener (S2) for the purpose of preventing the generation of a sticky feeling or twining in handling the film by a hand. When the amount of the clinging agent exceeds 20 parts by weight, though a sticky feeling or twining is not generated at the time of handling the film, necessary clinging properties are not obtained: In particular, clinging properties in the case of pressing under a low load such as the time of packaging food are not obtained. When the amount of the clinging agent is less than 2 parts by weight, necessary clinging properties are not obtained.

A mineral oil (S4) to be contained in the surface layer (A) is used as a clinging assistant. The amount of addition of the mineral oil is from 2 to 20 parts by weight, and preferably from 4 to 10 parts by weight based on 100 parts by weight of the total sum of the crystalline polypropylene-based resin (S1) and the softener (S2) from the viewpoint of imparting a good hand touch feeling and stable clinging properties.

Examples of the mineral oil include ones which are obtained by purification of a crude oil, such as liquid paraffin, and white mineral oil. Of these, a mineral oil having a rate of naphthene of not more than 33 % by weight is preferable, and a mineral oil having a rate of naphthene of not more than 32 % by weight is more preferable. By using a mineral oil having a rate of naphthene of not more than 33 % by weight, in handling the wrap film, the sticky feeling of the film can be more improved. In order to obtain more satisfactory clinging properties, the lower limit of the rate of naphthene is preferably 28 % by weight.

By using a combination of specific amounts of the ester compound of rosin as a clinging agent and the mineral oil as a clinging assistant, the wrap film of the invention can provide a wrap film which is free from stickiness and twining at the time of handling and which keeps clinging properties. In particular, by this combination, it is possible to provide a film having an excellent hand touch feeling without being influenced by the content of the amorphous or lowly crystalline propylene-based α-olefin copolymer or butene-1 polymer as a softener.

In the surface layer (A) comprising a polypropylene based resin composition, it is also possible to mix known additives such as antioxidants within the range where the object of the invention is not deviated.

In the film of the invention, a core layer (B) is disposed adjacent to the foregoing surface layer (A). In this way, since the mineral oil in the surface layer (A) transfers to the core layer (B) due to a bleed-in phenomenon, it is possible to hold only a proper amount of the mineral oil in the surface layer.

A crystalline polypropylene based resin (C1) for forming the core layer (B) may be the same as or different from that in the surface layer (A). Likewise the surface layer (A), ones which come up to the food package standards are preferable.

Examples of a mineral oil (C2) which is used in the core layer (B) of the invention include ones which are obtained by purification of a crude oil, such as liquid paraffin, and white mineral oil. Likewise the mineral oil (S4) to be used in the surface layer (A), is a mineral oil having a rate of naphthene of not more than 33 % by weight, and a mineral oil having a rate of naphthene of not more than 32 % by weight is preferable. The lower limit of the range of naphthene is preferably 28 % by weight. Likewise the surface layer (A), by using a mineral oil having the foregoing rate of naphthene, in handling the wrap film, the sticky feeling and clinging properties of the film can be further improved.

When the total sum of the crystalline polypropylene based resin (C1) and the mineral oil (C2) is defined as 100 % by weight, the amount of addition of the mineral oil (C2) is 1 % by weight or more for the purposes of suppressing a bleed-in phenomenon and keeping clinging properties and pulling-out properties with a lapse of time and not more than 20 % by weight from the viewpoints of stiffness and stable film forming properties. The amount of addition of the mineral oil (C2) is preferably from 2 to 15 % by weight, and more preferably from 2 to 12 % by weight.

Since the mineral oil present in the surface layer
(A) transfers from the surface layer (A) to the core layer
(B) due to a bleed-in phenomenon, the ratio of the foregoing mineral oil to the clinging agent in the surface layer (A) is decreased. Accordingly, the clinging properties and sticky feeling as obtained at the initial stage are changed. As a countermeasure thereto, it may be considered to increase the layer constituent ratio of the surface layer (A) to prevent a bleed-in phenomenon from occurring. However, the composition of the surface layer (A) is of a soft composition for the sake of revealing high clinging properties. For that reason, a modulus of the entire film drops so that the stiffness is remarkably lowered.

Then, according to the invention, by adding a specific amount of the mineral oil in the core layer (B) as disposed adjacent to the surface layer (A), it is possible to suppress the bleed-in phenomenon and to keep clinging properties and pulling-out properties without largely reducing a modulus of the entire film.

For the purpose of securing molding processability, it is also possible to mix known additives such as antioxidants in the composition of the core layer (B) within the range where the object of the invention is not deviated.

With respect to the layer constituent ratio of the film of the invention, the volumetric ratio of the surface layer (A) including the both surfaces to the core layer (B) is defined as f, wherein f is in the range of from 0.2 to 2.7. When the volumetric ratio of the surface layer (A) is less than 0.2, there is some possibility that the clinging properties cannot be revealed over the entire surface of the film. When the volumetric ratio of the surface layer (A) exceeds 2.7, the entire film becomes soft and the stiffness is lowered so that an easy-to-use may possibly become lowered.

Though a ratio in thickness between the front and back surfaces of the surface layer (A) is not particularly limited, it is preferable that the both surfaces have substantially the same thickness.

Furthermore, in constituting a multilayered film, in addition to the surface layer (A) and the core layer (B), for example, a rework layer constituted of a trim edge at the time of production or the like may be provided within the range where the object of the invention is not hindered. In view of the balance between the clinging properties and the pulling-out properties, it is preferable that such other layer has a thickness of not more than 5 % by weight of the whole of the layers and a volumetric ratio of not more than 5 % of the whole of the layers. However, it is required to laminate such other layer in such a manner that the state that the surface layer (A) and the core layer (B) are disposed adjacent to each other is not hindered.

In the wrap film of the invention, clinging energy is employed as an index regarding the clinging properties. Clinging energy as referred to herein is an index for evaluating the film-to-film or film-to-container clinging properties when a container or food is covered with a wrap film. As described previously, such clinging properties, as well as the pulling-out properties, are an important characteristic. The foregoing clinging energy is determined from the amount of work done when the adhered films are separated from each other. The measurement is according to a method as described later. This clinging energy is preferably from 0.8 to 1.5 mJ, and more preferably from 0.9 to 1.2 mJ from the viewpoint of proper clinging properties.

The pulling-out force of the wrap film as referred to in the invention, as well as the clinging properties, is an important characteristic and evaluates easy pulling-out properties when a film is pulled out from a film roll contained in a dispenser box. The measurement is carried out by a method as described later. This pulling-out force is preferably from 100 to 400 mN, more preferably from 100 to 300 mN, and more preferably from 100 to 200 mN from the viewpoint of good pulling-out properties.

It is preferable that the surface of the film of the invention has a specific structure when its observation is carried out by imaging the information of the phase caused by the stimulation of an atomic force microscope (hereinafter "AFM") cantilever. When the information of the phase caused by the stimulation of an cantilever is observed, a portion with small delay, that is, a hard portion is indicated by a light phase image, while a portion of large delay, that is, a soft portion is indicated by a dark phase image.

When the desired surface of the wrap film of the invention is observed by this method, it is formed of a fibril network structure and a matrix existing therebetween. The "network structure" as referred to herein is a continuous portion of the image which seems light, while the "matrix" is a discontinuous portion which is encompassed by this network structure and seems dark. The light portion which is observed continuously is defined as a "fibril network structure", while the discontinuous dark portion is defined as a "matrix".

An average fibril width is preferably 1 nm or more and not more than 100 nm, and more preferably 10 nm or more and not more than 50 nm. When the average fibril width falls within this range, smoothness of the film surface is maintained, and the clinging properties are further enhanced.

The size of the matrix is preferably 3 nm or more and not more than 1 µm, and more preferably 10 nm or more and not more than 50 nm in terms of an average width. When the average size of the matrix falls within this range, the clinging component constituting the matrix is retained in the network structure on the film surface and does not appear on the surface more than necessary. Also, the film surface is free from a sticky feeling and twining in handling by a hand while keeping the clinging properties.

In the network structure of the invention, the crystalline portion of the propylene based resin mainly forms the fibril. The amorphous portion of polypropylene and the softener, clinging agent and mineral oil mainly form the matrix. As described previously, when a network structure of the fibril having a specific size is taken, a soft component which largely influences the clinging properties of the matrix portion is kept and exists in only the minimum amount necessary for revealing the clinging properties on the surface.

In the case where a softened component is locally present on the film surface on which the network structure is not formed, or in the case where a softened component is present as a sea-island structure in the form larger in size than the pore of the network structure as specified in the invention, the clinging component does not uniformly exist on the surface, and a balance between the clinging properties and the pulling-out properties is lowered.

It is preferable that the film of the invention has specific flexibility. Specifically, a tensile modulus is preferably from 200 to 1,000 MPa. The tensile modulus is determined by measuring an average value of tensile modulus at the time of 2 % strain in the machine direction (MD direction, i.e., the take-up direction) and the transverse direction (TD direction, i.e., the direction vertical to the take-up direction) by using a tensile tester (universal tensile compression tester as manufactured by Shinko Tsushin Industry Co., Ltd.) according to the method as defined in ASTM-D-882. This value is preferably 200 MPa or more from the viewpoints of flexibility, stiffness and easy-to-use of the film and not more than 1,000 MPa from the viewpoints of flexibility, clinging properties and easy-to-use. This value is more preferably 400 MPa or more and less than 700 MPa.

The thickness of the film of the invention is preferably 3 µm or more from the viewpoints of strength and stiffness as a packaging film and easy-to-use upon packaging and not more than 20 µm from the viewpoints of clinging properties to an article to be packaged, easy-to-use of the film, weight and roll diameter of a product when formed as a food wrap film for home use, and easiness of handling at the time of use. In particular, the thickness is more preferably from 6 µm to 15 µm as a food wrap film for home use in which clinging properties, easy-to-use for pulling out, etc. are required.

The film of the invention can be produced by using a known film formation method. The preparation of the polypropylene based resin composition of the surface layer (A) is carried out by melt kneading by an extruder, etc. Since the softener and the clinging agent are solid at normal temperature, they are charged in prescribed amounts in a blender, etc. together with a commercially available polypropylene based resin pellet, and the mixture is sufficiently mixed uniformly. The resulting mixture is charged in an extruder for surface layer. Since each of the mineral oils in the surface layer (A) and the core layer (B) is liquid at normal temperature, liquid injection equipment is provided on the way of each of an extruder for surface layer and an extruder for core layer, and the mineral oil is added to the molten and plasticized resin on the way of a screw.

The mixture is kneaded under an appropriate extrusion condition to form a uniform composition, which is then extruded from a multilayer die, etc. into a multilayered film having a surface layer and a core layer and optionally a rework layer. It is also possible to sufficiently melt knead each of compositions for the surface layer (A) and the core layer (B) using a known device such as a twin-screw extruder permitting midway addition, pelletize the mixture and then charge the pellet into each of an extruders for surface layer and an extruder for core layer.

For the purpose of forming a film having a multilayered construction, for example, in the case of forming a three-layer construction, the foregoing extruder for surface layer and extruder for core layer are aligned in parallel, and the prescribed resins are charged into the respective extruders, followed by sufficient melting and kneading. In the downstream side, the resins from these extruders are merged into a three-layer stratiform state and then molded and extruded in a sheet form by using, for example, an annular die or a T die having a slit-like discharge port, etc. The extruded resin is solidified by a known method such as passing it in a cooling water tank and bringing it into contact with cold air or a cooling roll. At this time, the cooling temperature of the extruded sheet surface is preferably 10 °C or higher from the viewpoints of surface smoothness and appearance and not higher than 50 °C from the viewpoints of bleeding properties of the clinging agent as blended in the surface layer (A) onto the surface and a clinging strength.

It is preferred to stretch the film at a ratio of 2 or more from the viewpoints of imparting a necessary strength as the film and providing excellent cutting properties of the film when used as a food packaging wrap film. The stretching is carried out by a usual method such as monoaxial or biaxial stretching by a roll method or a tenter method, multiaxial stretching by a tubular method.

In the case of a sequential biaxial stretching method in the machine direction and/or transverse direction, the stretching order in the machine and transverse directions is not particularly specified. The stretching ratios in the machine and transverse directions may not be the same as each other. It is more preferred to stretch the film at a stretching ratio of 2 or more in the machine and transverse directions by multiaxial stretching by a tubular method. After completion of the stretching, the film is formed into a product adaptive with an intended product shape by trimming the end portion of the film, cutting the film into a desired size, winding it around a paper tube, etc.

In the case of multiaxial stretching by a tubular method, for the purpose of adjusting a thermal shrinkage ratio of the film, the stretched film may be heat set by a known method. Examples of the method which can be used include a method by contact heating from a roll or indirect heating by infrared rays while restraining the movement of the film in the MD direction, a method for heating by hot air or radiation heat while restraining the movement of the film in the transverse direction by a tenter, and a method for heating by hot air or radiation heat in the state that bubbles are again formed.

The film according to the invention is excellent in not only the balance between clinging properties and hand touch feeling as required as a performance of the wrap film but also transparency, heat resistance, appropriate flexibility, cutting properties and safety so that i-t can be suitably used as a food packaging wrap film for home use.

The present invention will be illustrated in greater detail with reference to the following Examples, but the invention should not be construed as being limited thereto.

The methods for evaluating the performances of the films obtained in the Examples and Comparative Examples are as follows.

### (Clinging energy)

Film-to-film clinging properties when a container such as dish or food was covered with a wrap film were evaluated and measured in the following manner.

Two columns having a bottom area of 25 cm² and a weight of 400 g, to each of the bottom surfaces of which filter paper having the same bottom area had been adhered in advance, were prepared. At each of the bottom surfaces to which filter paper had been adhered, a wrap film was fixed under a tension so as to avoid wrinkles from appearing in the film. The two columns were fitted closely with their film surfaces inside and contact bonded under a load of 500 g for one minute under a condition at 23 °C and a relative humidity of 50 %. Then, the films overlapped were separated in a direction vertical to the surface at a rate of 5 mm/min by a tensile tester (universal tensile compression tester manufactured by Shinko Tsushin Industry Co., Ltd.), and energy (mJ) as generated at this time was designated as clinging energy.
AA: 0.8 mJ or more and less than 1.5 mJ
A: 0.5 mJ or more and less than 0.8 mJ, or 1.5 mJ or more and less than 2.0 mJ
B: 0.3 mJ or more and less than 0.5 mJ, or 2.0 mJ or more and less than 3.0 mJ
C: less than 0.3 mJ, or 3.0 mJ or more

### (Sticky feeling)

A wrap film was cut out into a size of 300 mm × 300 mm and covered on a cylindrical heat resistant glass container having a diameter of 80 mm and a height of 80 mm. The side surface of the glass container as covered by the wrap film was pressed by the palm for 5 seconds, and when the palm came into contact with the surface of the wrap film, the feeling was organoleptically evaluated and digitalized according to the following criteria.

The case where the sticky feeling is given is designated as "score 0", while the case where the sticky feeling is not given is designated as "score 1". 50 homemakers selected at random were asked to carry out organoleptic evaluation according to the foregoing criteria. The scores of the 50 homemakers were summed.
AA: The total score is 40 or more.
A: The total score is 30 or more and less than 40.
B: The total score is 20 or more and less than 30.
C: The total score is less than 20.

### (Twining)

A wrap film was cut out into a size of 300 mm x 300 mm and covered on a cylindrical heat resistant glass container having a diameter of 80 mm and a height of 80 mm. The side surface of the glass container as covered by the wrap film was pressed by the palm for 5 seconds, and the palm was then left. At that time, the degree at which the wrap film left from the container and clung to the hand was organoleptically evaluated and digitalized according to the following criteria.

Score 3: When the hand was left, the wrap film immediately left from the hand.

Score 2: When the hand was left, the wrap film left from the container while the wrap film of less than 1/10 of the surface area of the container clung to the hand.

Score 1: When the hand was left, the wrap film left from the container while the wrap film of 1/10 or more and less than 1/3 of the surface area of the container clung to the hand.

Score 0: When the hand was left, the wrap film left from the container while the wrap film of 1/3 or more of the surface area of the container clung to the hand.

50 homemakers selected at random were asked to carry out organoleptic evaluation according to the foregoing criteria.
AA: The average score is 2.3 or more.
A: The average score is 1.7 or more and less than 2.3.
B: The average score is 1.0 or more and less than 1.7.
C: The average score is less than 1.0.

### (Pulling-out force)

A pulling-out force is one for evaluating pulling-out properties of a film at the time of pulling out from a film roll and was measured in the following manner.

A 20 m portion of a film as slit into a width of 300 mm was wound around a paper tube having an outer diameter of 41 mm, an inner diameter of 38 mm and a width of 308 mm under a tension of 20 N at a rate of 100 m/min, to prepare a film roll.

Both ends of the foregoing paper tube of the film roll were nipped and fixed by an exclusive nipping tool having a rotary portion which turns under a light load, and this nipping tool was fixed at the lower portion of a tensile tester (universal tensile compression tester manufactured by Shinko Tsushin Industry Co., Ltd.). The end portion of the film was then adhered to and fixed at an upper fixing tool of 330 mm in a width, and a force available upon unwinding the film at a rate of 1,000 mm/min was measured. The maximum load at this time was designated as a pulling-out force.

In order to find a time-dependent change of the pulling-out force, the pulling-out force of the sample 24 hours after the formation and that of the sample 21 days after the storage in an atmosphere of 40 °C and a relative humidity of 20 % were measured.

The pulling-out force before the storage was evaluated according to the following criteria:
AA: 100 mN or more and less than 400 mN
A: 400 mN or more and less than 600 mN
B: 600 mN or more and less than 1,000 mN
C: less than 100 mN, or 1,000 mN or more

### (Transparency)

The cloudiness of a film was measured using NDH-300A (manufactured by Nippon Denshoku Industries, Ltd.) according to the method as defined in ASTM-D-103, and transparency was evaluated according to the following criteria.
AA: less than 1.0
A: 1.0 or more and less than 2.0
B: 2.0 or more and less than 3.0
C: 3.0 or more

### (Heat resistance)

For evaluation of the heat resistance, a heat resistant temperature was measured based on Tokyo Consumer Life Ordinance, Article 11. A film having a heat resistant temperature of 140 °C or higher was ranked "AA", that having a heat resistant temperature of 130 °C or 135 °C was ranked "A", and that having a heat resistant temperature of not higher than 125 °C was ranked "C".

### (Flexibility)

For evaluation of the flexibility, tensile moduli of a film in the machine direction (MD) and the transverse direction (TD) upon 2 % strain were measured using a tensile tester (universal tensile compression tester manufactured by Shinko Tsushin Industry Co., Ltd.) according to the method as defined in ASTM D882. The evaluation was made according to the following criteria.

In the average of the tensile moduli of the film in the MD and TD directions:
AA: 400 MPa or more and less than 700 MPa
A: 200 MPa or more and less than 400 MPa, or 700 MPa or more and less than 1000 MPa
B: 100 MPa or more and less than 200 MPa
C: less than 100 MPa, or 1,000 MPa or more

### (Cutting properties)

A film was wound around a paper tube so as to have a width of 300 mm and a roll length of 20 m, and the resulting film roll was put in a dispenser box of SARAN WRAP (registered trade mark) as manufactured by Asahi Kasei Life & Living Corporation. The film was cut by a blade attached to the box. The cutting properties were evaluated from the cutting state at that time according to the following criteria.
AA: The film can be cut sharply with a light force.
A: Some force is necessary for cutting, but the film can be cut sharply.
B: The film can be cut but not easily.
C: The film cannot be cut smoothly. Sometimes it is not cut but stretched or broken obliquely, or the dispenser box is broken owing to an excessive load to be applied.

### (Observation of film surface)

The film surface was observed as a phase image obtained by an atomic force microscope. The film was adhered and fixed to a glass, and the surface was observed as a phase image in a Tapping mode by NANO SCOPE (registered trade mark) IIIa as manufactured by Digital Instrument. The measurement was carried out by using a cantilever (spring constant: 0.07 to 0.58 N/m) of an Si single crystal under a condition of a scan rate of 0.5 to 1 Hz, a scan size of 2 µm × 2 µm, a Z limit of 440 V and a sampling score of 512 × 512. When the contact pressure of the cantilever was controlled, depending on the film, a set point ranged from 0.8 to 1.4V at a target amplitude of 2 V, and a set point ranged from 2.0 to 3.5 V at a target amplitude of 4 V. The 2 µm × 2 µm field was enlarged by 40,000 times, and from the resulting 80 mm x 80 mm image, 100 fibril widths and 100 fibril-to-fibril distances were extracted. An average value of 80 widths or 80 distances after the top 10 and the bottom 10 were omitted was adopted. The surface structure was evaluated in terms of an average fibril width according to the following criteria.
AA: 1 nm or more and less than 50 nm
A: 50 nm or more and less than 100 nm
C: 100 nm or more

The average fibril-to-fibril distance was also evaluated according to the following criteria:
AA: 10 nm or more and less than 50 nm
A: 3 nm or more and less than 10 nm, or 50 nm or more and less than 1000 nm
C: less than 3 nm, or 1,000 nm or more

The film was evaluated synthetically based on the foregoing results. The film ranked "AA" in each item was judged particularly excellent, that ranked only "AA" or "A" was judged practically usable, and that having a ranking of "B" or "C" was not suited for practical use.

### Example 1

A crystalline polypropylene based resin (GRAND POLYPRO (registered trade mark) F327, a terpolymer of propylene, ethylene and butene-1 as manufactured by Grand Polymer Co., Ltd.) and, as a softener, a lowly crystalline propylene-α-olefin copolymer resin (TAFMER (registered trade mark) XR110T as manufactured by Mitsui Chemicals, Inc.) were mixed in a weight ratio of 95/5. To 100 parts by weight of this mixture, 5 parts by weight of FORAL (registered trade mark) 105E as manufactured by Eastman Chemical Company, which is a hydrogenated rosin pentaerythritol ester, was charged in a blender and thoroughly mixed at normal temperature for 5 minutes.

Next, the mixture was melt kneaded by a co-rotating twin-screw extruder (TEM-35BS as manufactured by Toshiba Machine Co., Ltd.) having a screw diameter of 37 mm and an L/D of 42, to prepare a pellet. In addition, a mineral oil (white mineral oil PAROL (registered trade mark) as manufactured by Crompton; dynamic viscosity at 40 °C: 67 cst) was added from the midway of a barrel by using an injection pump. PAROL (registered trade mark) has a rate of naphthene of 32 % and a rate of paraffin of 68 % as measured according to ASTM D-3238. This was added in an amount of 5 parts by weight based 100 parts by weight of the foregoing mixture of the crystalline polypropylene based resin and the softener. This mixture was used as a resin for surface layer.

A crystalline polypropylene based resin which is the same as described previously was molten by a co-rotating twin-screw extruder (TEM-35BS as manufactured by Toshiba Machine Co., Ltd.) having a screw diameter of 37 mm and an L/D of 30, and in addition, 20 parts by weight of a mineral oil (white mineral oil PAROL (registered trade mark) as manufactured by Crompton) was added from the midway of the extruder by using an injection pump. The foregoing crystalline polypropylene based resin and the mineral oil were added in a weight ratio of 95/5. The resulting pellet was prepared as a resin for core layer. The relation in a volumetric ratio of each layer and the like are shown in Table 1.

A multilayered stretched film was prepared by using the foregoing resins. First of all, the resin mixtures as obtained previously were respectively charged in an extruder for surface layer and an extruder for core layer of a multilayer extruder capable of extruding a symmetric resin layer construction of surface layer/core layer/surface layer. After thoroughly melting in each of the extruders, a raw film was extruded at 220 °C by a multilayer annular die and then cooled by water.

The resulting raw film was stretched at 120 °C at a stretching ratio of 5 in the machine direction and 4 in the transverse direction, respectively by using an inflation bubble type stretching machine. Thereafter, an end portion of the cylindrical film was trimmed, and the film was separated and taken up one by one. As a result, there was obtained a 10 µm-thick substantially uniform film having a ratio in thickness of the respective layers of 0.20/0.60/0.20 in the order of the surface layer, the core layer and the surface layer. Physical properties of this film revealed good performances as shown in Table 1.

### Example 2

A 10 µm-thick film was obtained in the same manner as in Example 1, except that a crystalline polypropylene based resin (GRAND POLYPRO (registered trade mark) F327, a terpolymer of propylene, ethylene and butene-1 as manufactured by Grand Polymer Co., Ltd.) and, as a softener, a butene-1 polymer (TAFMER (registered trade mark) BL4000 as manufactured by Mitsui Chemicals, Inc.) were mixed in a weight ratio of 95/5 in the resin composition for surface layer. Physical properties of this film revealed good performances as shown in Table 1.

### Example 3

A 10 µm-thick film was obtained in the same manner as in Example 1, except that a mineral oil (white mineral oil KAYDOL (registered trade mark) as manufactured by Crompton; dynamic viscosity at 40 °C: 67 cSt) was used as the mineral in the resin composition of each of the surface layer and the core layer. KAYDOL (registered trade mark) has a rate of naphthene of 35 % and a rate of paraffin of 65 % as measured according to ASTM D-3238. Physical properties of this film revealed good performances as shown in Table 1.

### Example 4

The crystalline polypropylene based resin and the lowly crystalline propylene-α-olefin copolymer resin as used in the surface layer of Example 1 were mixed in a weight ratio of 60/40. A 10 µm-thick film was obtained in the same manner as in Example 1, except for changing the resin for surface layer to a resin as prepared by adding 5 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin and adding 15 parts by weight of a mineral oil PAROL (registered trade mark) as manufactured by Crompton to 100 parts by weight of the foregoing resin composition of the crystalline polypropylene based resin and the lowly crystalline propylene-α-olefin copolymer resin. Physical properties of this film revealed good performances as shown in Table 1.

### Example 5

A 10 µm-thick film was obtained in the same manner as in Example 1, except for changing the resin for surface layer to a resin as prepared by adding 15 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin used in the surface layer of Example 1 and adding 5 parts by weight of the mineral oil to 100 parts by weight of the foregoing resin composition of the crystalline polypropylene based resin and the lowly crystalline propylene-α-olefin copolymer resin. Physical properties of this film revealed good performances as shown in Table 1.

### Example 6

A 10 µm-thick film was obtained in the same manner as in Example 1, except for changing the resin for surface layer to a resin as prepared by adding 5 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin used in the surface layer of Example 1 and adding 15 parts by weight of the mineral oil to 100 parts by weight of the foregoing resin composition of the crystalline polypropylene based resin and the lowly crystalline propylene-α-olefin copolymer resin. Physical properties of this film revealed good performances as shown in Table 1.

### Example 7

A 10 µm-thick film was obtained in the same manner as in Example 1, except that the weight ratio of the crystalline polypropylene based resin to the mineral oil in the core layer of Example 1 was changed to 97/3. Physical properties of this film revealed good performances as shown in Table 1.

### Example 8

A 10 µm-thick film was obtained in the same manner as in Example 1, except that the ratio in thickness of the respective layers was changed to 0.15/0.70/0.15 in the order of the surface layer, the core layer and the surface layer. Physical properties of this film revealed good performances as shown in Table 1.

### Example 9

A 10 µm-thick film was obtained in the same manner as in Example 1, except that the ratio in thickness of the respective layers was changed to 0.35/0.30/0.35 in the order of the surface layer, the core layer and the surface layer. Physical properties of this film revealed good performances as shown in Table 1.

### Comparative Example 1

A 10 µm-thick film was obtained in the same manner as in Example 1, except for changing the resin for surface layer to a resin as prepared by using 100 parts by weight of the crystalline polypropylene based resin as used in the surface layer of Example 1, without adding a lowly crystalline propylene-α-olefin copolymer resin; adding 5 parts by weight of FORAL (registered trade mark) 105E as manufactured by Eastman Chemical Company, which is a hydrogenated rosin pentaerythritol ester, to 100 parts by weight of the crystalline polypropylene based resin; and adding 15 parts by weight of a white mineral oil PAROL (registered trade mark) as manufactured by Crompton to 100 parts by weight of the foregoing crystalline polypropylene based resin. With respect to physical properties of this film, target clinging properties were not obtained as shown in Table 2.

### Comparative Example 2

The crystalline polypropylene based resin and the lowly crystalline propylene-α-olefin copolymer resin as used in the surface layer of Example 1 were mixed in a weight ratio of 40/60. A 10 µm-thick film was obtained in the same manner as in Example 1, except for changing the resin for surface layer to a resin as prepared by adding 5 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin and adding 15 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin. With respect to physical properties of this film, results with deteriorated hand feeling were obtained as shown in Table 2.

### Comparative Example 3

A 10 µm-thick film was obtained in the same manner as in Example 1, except for changing the resin for surface layer to a resin as prepared by adding 25 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin used in the surface layer of Example 1 and adding 5 parts by weight of the mineral oil to 100 parts by weight of the foregoing resin composition of the crystalline polypropylene based resin and the lowly crystalline propylene-α-olefin copolymer resin. With respect to physical properties of this film, results with deteriorated hand feeling were obtained as shown in Table 2.

### Comparative Example 4

A 10 µm-thick film was obtained in the same manner as in Example 1, except for changing the resin for surface layer to a resin as prepared by adding 5 parts by weight of FORAL (registered trade mark) 105E as manufactured by Eastman Chemical Company, which is a hydrogenated rosin pentaerythritol ester, to 100 parts by weight of the resin composition of the crystalline polypropylene based resin and the lowly crystalline propylene-α-olefin copolymer resin used in the surface layer of Example 1 and adding 25 parts by weight of the mineral oil to 100 parts by weight of the foregoing resin composition of the crystalline polypropylene based resin and the lowly crystalline propylene-α-olefin copolymer resin. With respect to physical properties of this film, results with deteriorated hand feeling were obtained as shown in Table 2.

### Comparative Example 5.

A 10 µm-thick film was obtained in the same manner as in Example 1, except that the core layer of Example 1 was made of a single body of a crystalline polypropylene based resin. With respect to physical properties of this film, results with low clinging properties were obtained as shown in Table 2.

### Comparative Example 6

A 10 µm-thick film was obtained in the same manner as in Example 1, except for changing the weight ratio of the crystalline polypropylene based resin to the mineral oil in the core layer of Example 1 to 75/25. With respect to physical properties of this film, results with clinging properties but deteriorated hand feeling were obtained as shown in Table 2.

### Comparative Example 7

A 10 µm-thick film was obtained in the same manner as in Example 1, except for changing the ratio in thickness of the respective layers to 0.4/0.2/0.4 in the order of the surface layer, the core layer and the surface layer. With respect to physical properties of this film, results with clinging properties but deteriorated hand feeling were obtained as shown in Table 2.

### Comparative Example 8

A 10 µm-thick film was obtained in the same manner as in Example 1, except for changing the ratio in thickness of the respective layers to 0.05/0.9/0.05 in the order of the surface layer, the core layer and the surface layer. With respect to physical properties of this film, target clinging properties were not obtained as shown in Table 2.

### Comparative Example 9

A 10 µm-thick film was obtained in the same manner as in Example 1, except for changing the resin for surface layer to a resin as prepared by using 100 parts by weight of the crystalline polypropylene based resin used in the surface layer of Example 1, without adding a lowly crystalline propylene-α-olefin copolymer resin; adding 5 parts by weight of CLEARON (registered trade mark) P125, which is a hydrogenated terpene resin, to 100 parts by weight of the crystalline polypropylene based resin; and adding 15 parts by weight of a white mineral oil PAROL (registered trade mark) as manufactured by Crompton to 100 parts by weight of the foregoing crystalline polypropylene based resin. With respect to physical properties of this film, target clinging properties were not obtained as shown in Table 2.

### Comparative Example 10

The crystalline polypropylene based resin and the lowly crystalline propylene-α-olefin copolymer resin as used in the surface layer of Example 1 were mixed in a weight ratio of 75/25. A 10 µm-thick film was obtained in the same manner as in Example 1, except for changing the resin for surface layer to a resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin and adding 5 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin. With respect to physical properties of this film, results with deteriorated hand feeling were obtained as shown in Table 2.

### Comparative Example 11

The crystalline polypropylene based resin and the lowly crystalline propylene-α-olefin copolymer resin as used in the surface layer of Example 1 were mixed in a weight ratio of 95/5. A 10 µm-thick film was obtained in the same manner as in Example 1, except for changing the resin for surface layer to a resin as prepared by adding 25 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin and adding 5 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin. With respect to physical properties of this film, results with deteriorated hand feeling were obtained as shown in Table 2.

### Comparative Example 12

The crystalline polypropylene based resin and the lowly crystalline propylene-α-olefin copolymer resin as used in the surface layer of Example 1 were mixed in a weight ratio of 95/5. A 10 µm-thick film was obtained in the same manner as in Example 1, except for changing the resin for surface layer to a resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin and adding 25 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin. With respect to physical properties of this film, results with target clinging properties but deteriorated hand feeling were obtained as shown in Table 2.

### Comparative Example 13

The crystalline polypropylene based resin and the lowly crystalline propylene-α-olefin copolymer resin as used in the surface layer of Example 1 were mixed in a weight ratio of 95/5. A resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin and adding 5 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin was used as the resin for surface layer. Also, a 10 µm-thick film was obtained in the same manner as in Example 1, except that the core layer was made of a single body of a crystalline polypropylene based resin. With respect to physical properties of this film, target clinging properties were not obtained as shown in Table 2.

### Comparative Example 14

The crystalline polypropylene based resin and the lowly crystalline propylene-α-olefin copolymer resin as used in the surface layer of Example 1 were mixed in a weight ratio of 95/5. A resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin and adding 5 parts by weight of a white mineral oil PAROL (registered trade mark) as manufactured by Crompton to 100 parts by weight of the foregoing resin composition of the crystalline polypropylene based resin and the lowly crystalline propylene-α-olefin copolymer resin was used as the resin for surface layer. Also, a 10 µm-thick film was obtained in the same manner as in Example 1, except for changing the weight ratio of the crystalline polypropylene based resin to the mineral oil in the core layer to 75/25. With respect to physical properties of this film, target clinging properties were not obtained as shown in Table 2.

### Comparative Example 15

A resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin used in the surface layer of Example 1 and adding 5 parts by weight of the mineral oil to 100 parts by weight of the foregoing resin composition of the crystalline polypropylene based resin and the lowly crystalline propylene-α-olefin copolymer resin was used as the resin for surface layer. Also, a 10 µm-thick film was obtained in the same manner as in Example 1, except for changing the ratio in thickness of the respective layers to 0.4/0.2/0.4 in the order of the surface layer, the core layer and the surface layer. With respect to physical properties of this film, results with deteriorated hand feeling were obtained as shown in Table 2.

### Comparative Example 16

A resin as prepared by adding 5 parts by weight of CLEARON (registered trade mark) P125, which is a hydrogenated terpene resin, to 100 parts by weight of the resin composition of the crystalline polypropylene based resin and the lowly crystalline propylene-α-olefin copolymer resin used in the surface layer of Example 1 and adding 5 parts by weight of the mineral oil to 100 parts by weight of the foregoing resin composition of the crystalline polypropylene based resin and the lowly crystalline propylene-α-olefin copolymer resin was used as the resin for surface layer. Also, a 10 µm-thick film was obtained in the same manner as in Example 1, except for changing the ratio in thickness of the respective layers to 0.05/0.9/0.05 in the order of the surface layer, the core layer and the surface layer. With respect to physical properties of this film, target clinging properties were not obtained as shown in Table 2.

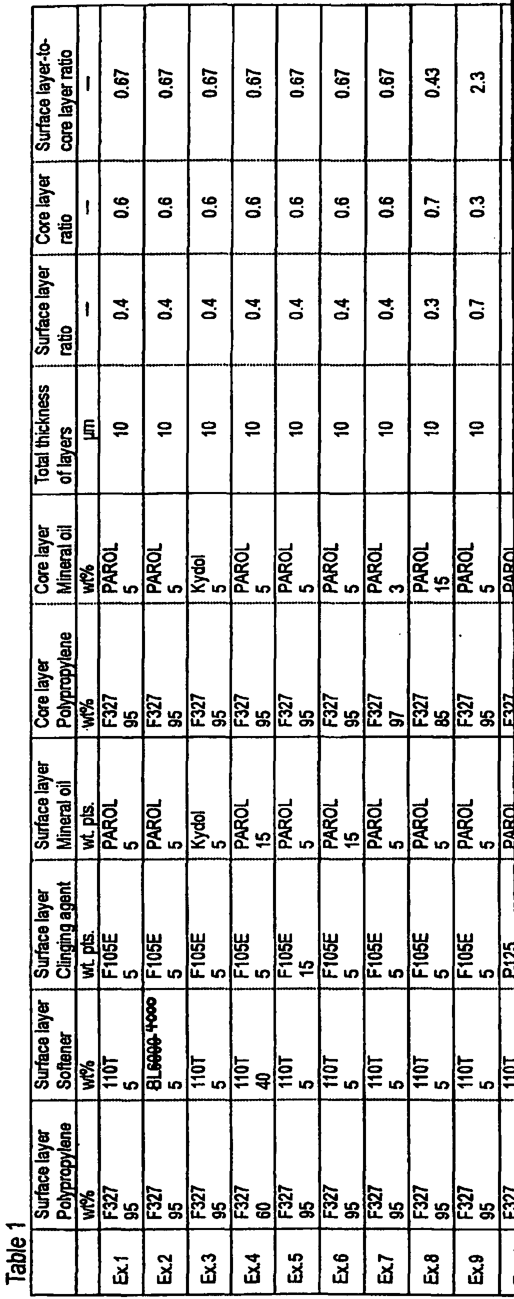

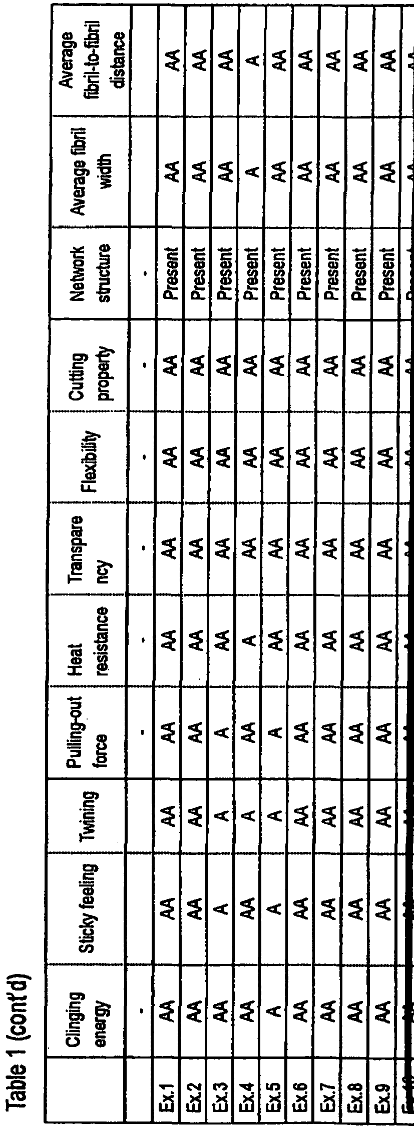

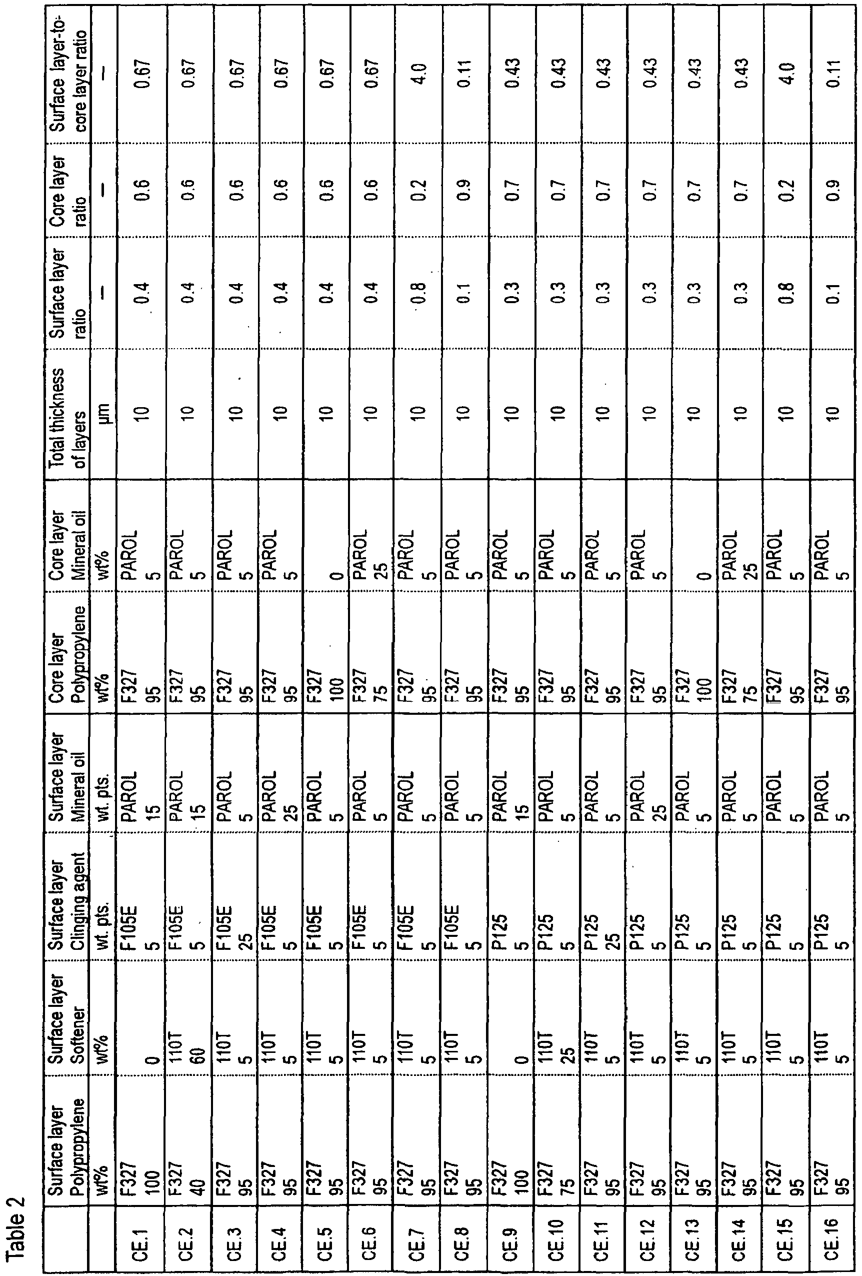

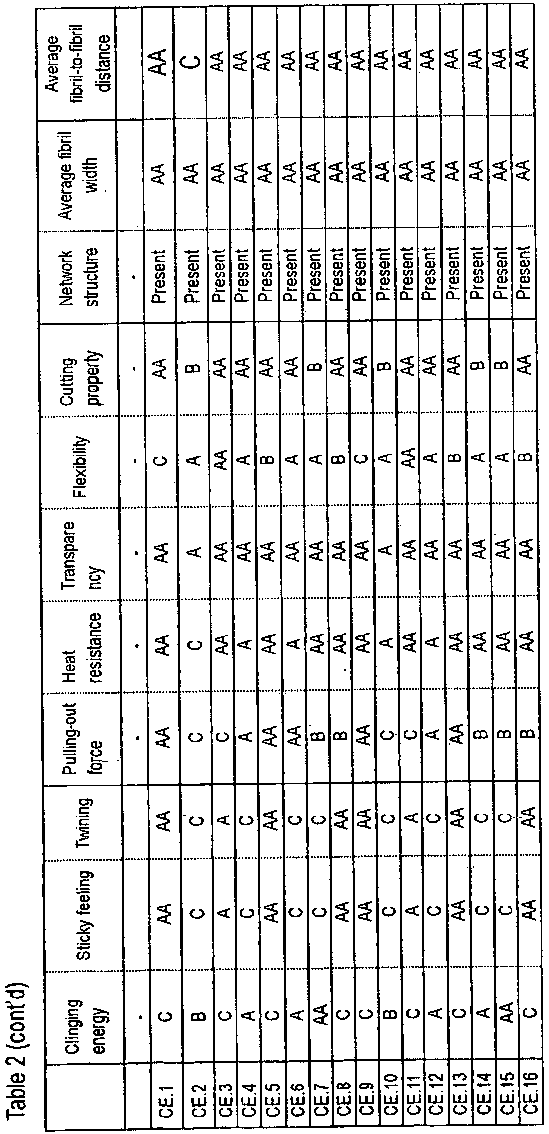

Incidentally, abbreviations in the tables denote the followings.

### Ex.: Example

### CE.: Comparative Example

F327: Crystalline polypropylene resin (GRAND POLYPRO (registered trade mark) F327 as manufactured by Grand Polymer Co., Ltd.)
110T: Lowly crystalline propylene-α-olefin copolymer resin (TAFMER (registered trade mark) XR110T as manufactured by Mitsui Chemicals, Inc.)
BL4000: Butene-1 copolymer (TAFMER (registered trade mark) BL4000 as manufactured by Mitsui Chemicals, Inc.)
F105: Hydrogenated rosin pentaerythritol ester (FORAL (registered trade mark) 105E as manufactured by Eastman Chemical Company)
P125: Hydrogenated product of 1-methyl-4-(1-methyl-ethenyl)-cyclohexene homopolymer (CLEARON (registered trade mark) as manufactured by Yasuhara Chemical Co., Ltd.)
R1125: Hydrogenated C9-fraction petroleum resin (REGALITE (registered trade mark) R1125 as manufactured by Eastman Chemical Company)
H130L: Hydrogenated C5-fraction petroleum resin (EASTOTAC (registered trade mark) H130L as manufactured by Eastman Chemical Company)
Parol: Mineral oil PAROL (registered trade mark) (white mineral oil as manufactured by Crompton)
Kaydol: Mineral oil KAYDOL (registered trade mark) (white mineral oil as manufactured by Crompton)

### INDUSTRIAL APPLICABILITY

In the light of the above, according to the invention, it is possible to provide good performances such that neither sticky feeling nor twining is brought in handling by a hand, while keeping necessary clinging properties. It is also possible to provide a polypropylene based multilayered film having excellent pulling-out properties, transparency, heat resistance, flexibility and cutting properties. In addition, a film using a specific mineral oil is improved with respect to stickiness to a hand. The subject film can be suitably used as a food packaging wrap film.

## Claims

1. A polypropylene based wrap film as a multilayered film, which comprises:
(A) a surface layer containing: a first composition comprising from 50 to 99 % by weight of (S1) a crystalline polypropylene based resin and from 1 to 50 % by weight of (S2) at least one softener selected from amorphous or lowly crystalline propylene-α-olefin copolymers and butene-1 polymers; and from 2 to 20 parts by weight of (S3) an ester compound of rosin as hydrogenated under a high pressure of 20 MPa or more and not more than 40 MPa and a polyhydric aliphatic alcohol and from 2 to 20 parts by weight of (S4) a mineral oil having a rate of naphthene of not more than 33 % by weight, each based on 100 parts by weight of the total sum (S1 + S2) of the first composition; and
(B) a core layer which is disposed adjacent to the surface layer and which contains from 80 to 99 % by weight of (C1) a crystalline polypropylene based resin and from 1 to 20 % by weight of (C2) a mineral oil,
wherein the volumetric ratio f of the surface layer (A) including both surfaces to the core layer (B) is in the range of from 0.2 to 2.7.

2. The polypropylene based wrap film according to claim 1, having clinging energy at 23 °C and a relative humidity of 50 % of from 0.5 to 1.5 mJ, and a pulling-out force of from 100 to 600 mN.

3. The polypropylene based wrap film according to any one of claims 1 or 2, which has a structure, when the surface of the film is observed as a phase image of an atomic force microscope at 40,000 magnifications, formed of a fibril network and a matrix existing therebetween, the fibril having an average width of 1 nm or more and not more than 100 nm and having an average fibril-to-fibril distance of 3 nm or more and not more than 1 µm.

4. The polypropylene based wrap film according to any one of claims 1 to 3, which has been stretched at a stretching ratio of 2 or more in the machine direction and/or transverse direction.

5. The polypropylene based wrap film according to any one of claims 1 to 4, which has an overall thickness of the film of from 3 to 20 µm.

## Patentansprüche

1. Verpackungsfolie auf Polypropylenbasis als mehrschichtige Folie, umfassend:
(A) eine Oberflächenschicht, enthaltend: eine erste Zusammensetzung, umfassend 50 bis 99 Gew.-% (S1) eines auf kristallinem Polypropylen basierenden Harzes und 1 bis 50 Gew.-% (S2) wenigstens eines Weichmachers, der aus amorphen oder geringfügig kristallinen Propylen-α-Olefin-Copolymeren und Buten-1-Polymeren ausgewählt ist; und 2 bis 20 Gewichtsteile (S3) einer Esterverbindung von Kolophonium, das unter einem hohen Druck von 20 MPa oder mehr und nicht mehr als 40 MPa hydriert ist, und einem mehrwertigen aliphatischen Alkohol sowie 2 bis 20 Gewichtsteile (S4) eines Mineralöls mit einem Naphthenanteil von nicht mehr als 33 Gew.-%, jeweils bezogen auf 100 Gewichtsteile der Gesamtsumme (S1 + S2) der ersten Zusammensetzung; und
(B) eine Kernschicht, die an die Oberflächenschicht angrenzt und 80 bis 99 Gew.-% (C1) eines kristallinen Harzes auf Polypropylenbasis und 1 bis 20 Gew.-% (C2) eines Mineralöls enthält;
wobei das Volumenverhältnis f der Oberflächenschicht (A) einschließlich beider Flächen zur Kernschicht (B) im Bereich von 0,2 bis 2,7 liegt.

2. Verpackungsfolie auf Polypropylenbasis gemäß Anspruch 1, die eine Anhaftenergie bei 23 °C und einer relativen Feuchtigkeit von 50% von 0,5 bis 1,5 mJ und eine Herausziehkraft von 100 bis 600 mN aufweist.

3. Verpackungsfolie auf Polypropylenbasis gemäß einem der Ansprüche 1 oder 2, die bei Beobachtung der Oberfläche der Folie als Phasenbild mit einem Rasterkraftmikroskop bei einer Vergrößerung von 40 000 eine Struktur aufweist, die aus einem Fibrillennetzwerk und einer dazwischen vorhandenen Matrix gebildet ist, wobei die Fibrillen eine mittlere Breite von 1 nm oder mehr und nicht mehr als 100 nm aufweisen und einen mittleren Abstand zwischen benachbarten Fibrillen von 3 nm oder mehr und nicht mehr als 1 µm aufweisen.

4. Verpackungsfolie auf Polypropylenbasis gemäß einem der Ansprüche 1 bis 3, die in Maschinenrichtung und/oder Querrichtung mit einem Streckverhältnis von 2 oder mehr gestreckt ist.

5. Verpackungsfolie auf Polypropylenbasis gemäß einem der Ansprüche 1 bis 4, die eine Gesamtdicke der Folie von 3 bis 20 µm aufweist.

## Revendications

1. Film d'emballage à base de polypropylène sous forme de film multicouche, qui comprend :
(A) une couche superficielle contenant : une première composition comprenant de 50 à 99 % en poids de (S1) une résine à base de polypropylène cristallin et de 1 à 50 % en poids de (S2) au moins un plastifiant choisi parmi les copolymères de propylène-α-oléfine amorphes ou faiblement cristallins et les polymères de butène-1 ; et de 2 à 20 parties en poids de (S3) un composé ester de rosine tel qu'hydrogéné sous une haute pression de 20 MPa ou plus et non supérieure à 40 MPa et un alcool aliphatique polyhydrique et de 2 à 20 parties en poids de (S4) une huile minérale ayant un taux de naphtène non supérieur à 33 % en poids, chacun sur la base de 100 parties en poids de la somme totale (S1 + S2) de la première composition ; et
(B) une couche centrale qui est disposée de manière à être adjacente à la couche superficielle et qui contient de 80 à 99 % en poids de (C1) une résine à base de polypropylène cristallin et de 1 à 20 % en poids de (C2) une huile minérale,
dans lequel le rapport volumétrique f de la couche superficielle (A) comprenant les deux surfaces à la couche centrale (B) se situe dans la plage de 0,2 à 2,7.

2. Film d'emballage à base de polypropylène selon la revendication 1, ayant une énergie d'adhérence à 23 °C et à une humidité relative de 50 % de 0,5 à 1,5 mJ, et une force d'arrachage de 100 à 600 mN.

3. Film d'emballage à base de polypropylène selon l'une quelconque des revendications 1 ou 2, qui a une structure, lorsque la surface du film est observée en tant qu'image de phase d'un microscope à force atomique au grossissement de 40 000, formée d'un réseau de fibrilles et d'une matrice présente entre celles-ci, la fibrille ayant une largeur moyenne de 1 nm ou plus et non supérieure à 100 nm et ayant une distance moyenne de fibrille à fibrille de 3 nm ou plus et non supérieure à 1 µm.

4. Film d'emballage à base de polypropylène selon l'une quelconque des revendications 1 à 3, qui a été étiré à un rapport d'étirage de 2 ou plus dans la direction machine et/ou la direction transversale.

5. Film d'emballage à base de polypropylène selon l'une quelconque des revendications 1 à 4, qui a une épaisseur globale du film de 3 à 20 µm.
